# EUROPÄISCHE PATENTSCHRIFT

(11) **EP 1 171 711 B1**
(45) Veröffentlichungstag und Bekanntmachung des Hinweises auf die Patenterteilung: **13.10.2004**
(21) Anmeldenummer: 00920725.9
(22) Anmeldetag: 19.04.2000
(51) Int. Cl.: F04B 35/04, H02K 33/16

(54) **SCHWINGKOLBENANTRIEB**
OSCILLATING PISTON DRIVE MECHANISM
ORGANE DE COMMANDE A PISTON OSCILLANT

(30) Priorität: 19.04.1999 DE 19917560; 18.04.2000 DE 10019108
(43) Veröffentlichungstag der Anmeldung: 16.01.2002
(73) Patentinhaber: Leybold Vacuum GmbH, 50968 Köln (DE)
(72) Erfinder: BAHNEN, Rudolf, D-52159 Roetgen (DE); HODAPP, Josef, D-50935 Köln-Sülz (DE); KNOLL, Gunter, D-52074 Aachen (DE)
(74) Vertreter: Leineweber, Jürgen, Dipl.-Phys.
(86) Internationale Anmeldenummer: PCT/EP2000/003528
(87) Internationale Veröffentlichungsnummer: WO 2000/063556

(56) Entgegenhaltungen:
- DE-A- 19 504 751
- GB-A- 2 052 886
- US-A- 3 422 765
- US-A- 3 884 125
- US-A- 4 353 220
- US-A- 4 638 193
- US-A- 5 395 218

## Beschreibung

Die Erfindung bezieht sich auf einen Schwingkolbenantrieb, insbesondere für eine Schwingkolbenvakuumpumpe mit den Merkmalen des Oberbegriffs des Patentanspruchs 1.

Ein Schwingkolbenantrieb mit diesen Merkmalen ist aus DE-A- 195 04 751 bekannt. Bei dieser Lösung ist ein das Gesamtsystem (Zylinder, Kolben, stirnseitig angeordnete Statormagnetsysteme, jeweils bestehend aus einer Spule und einem Permanentmagneten) umfassendes Magnetflussleitstück vorhanden, um Streuverluste zu vermeiden. Es sichert jedoch nicht eine optimale Führung des Magnetflusses zu den die Antriebskräfte erzeugenden Bauteilen.

Zum Stand der Technik gehört auch noch der Inhalt der DE-A-41 02 710. Bei diesem Schwingkolbenantrieb befinden sich im Zylinder zwei Federn, von denen sich jeweils eine zwischen einer der beiden Stirnseiten des Kolbens und der zugehörigen Stirnseite des Zylinders erstreckt. Dadurch wird erreicht, dass der Kolben im Ruhezustand eine zentrale axiale Lage einnimmt. Bei einer ständigen Beanspruchung von Spiralfedern ist eine Ermüdung des Federwerkstoffes unvermeidbar. Die Standzeit von Schwingkolbenantrieben nach dem Stand der Technik ist deshalb auf die Lebensdauer des Federwerkstoffes begrenzt.

Der Schwingkolbenantrieb nach der DE-A-41 02 710 ist Bestandteil einer Schwingkolbenpumpe, bei der mindestens eine der beiden vom Kolben und vom Zylinder gebildeten Kammern die Funktion eines Kompressionsraumes hat. In diesem Raum bzw. in diesen Räumen befinden sich die Spiralfedern. Dieses führt zu unerwünschten Toträumen, wodurch die Pumpwirkung beeinträchtigt ist.

Der vorliegenden Erfindung liegt die Aufgabe zugrunde, einen Schwingkolbenantrieb der eingangs genannten Art in Bezug auf die Führung des Magnetflusses zu verbessern. Außerdem soll erreicht werden, dass der Antrieb für den Einsatz bei Schwingkolbenvakuumpumpen besonders geeignet ist.

Erfihdungsgemäß wird diese Aufgabe durch die kennzeichnenden Merkmale der Patentansprüche gelöst.

Dadurch, dass das U-förmige Polbauteil der statorseitigen Permanentmagneten unmittelbar anliegt und dort endet, werden eine verbesserte Magnetfluss-Führung und damit eine optimierte Erzeugung der Antriebskräfte erreicht. Bei symmetrischer Ausführung nimmt der Kolben im Ruhezustand eine im wesentlichen zentrale axiale Lage ein. Im Ruhezustand, das heißt bei stromlosem Elektromagneten, bewirkt die Überlangerung der Magnetfelder, die von den am Kolben und im Stator angebrachten Permanentmagneten erzeugt werden, dass den Kolben Kräfte wirken, die diesen axial zentrieren. Dadurch ergibt sich im Ruhezustand eine definierte, z.B. mittlere Kolbenlage (bei symmetrischer Ausführung) , die allein auf der Wirkung von Magnetkräften beruht und keiner mechanischen Zusatzeinrichtungen, wie Federn, bedarf.

Zweckmäßig ist der Kolben mit zwei Permanentmagneten ausgerüstet, von denen jeweils einer im Bereich der beiden Stirnseiten des Kolbens angeordnet ist. Jedem dieser kolbenseitigen Permanentmagneten ist jeweils ein statorseitiger Permanentmagnet zugeordnet, und zwar im Bereich der Stirnseiten des Zylinders mit in etwa gleicher radialer Lage.

Bei einer besonders einfachen Lösung ist der Kolben mit nur einem in axialer Richtung etwa zentral angeordneten Permanentmagnetring ausgerüstet. Seitlich neben diesem Ring befinden sich je ein statorseitig angeordneter Permanentmagnet, deren Abstände vom Magnetring des Kolbens die Amplitude der Kolbenbewegung bestimmen und die die gewünschte Verzögerung des Kolbens bewirken, wenn er sich einem der Totpunkte nähert.

Sind die Permanentmagneten des Stators zu den korrespondierenden Permanentmagneten des Kolbens in axialer Richtung gegensinnig magnetisiert, dann erzeugen ihre Magnetfelder abstoßende Kräfte. Diese Kräfte haben die Wirkung, dass der sich einer Zylinderstirnseite nähernde Kolben abgebremst und schließlich die Umkehrbewegung des Kolbens eingeleitet wird. Ist die Anordnung insgesamt symmetrisch aufgebaut, und zwar sowohl in Bezug auf ihre Abmessungen als auch in Bezug auf die Stärke der Magnetfelder, dann nimmt der Kolben im stromlosen Zustand der Spule des Elektromagneten eine axial mittige Lage ein.

Beim Einsatz des erfindungsgemäßen Antriebes in einer Schwingkolbenvakuumpumpe kann ein in axialer Richtung asymmetrischer Aufbau zweckmäßig sein, da die Symmetrieverhältnisse für die Kraftkennlinie maßgebend sind. Ist die Belastung der beiden stirnseitig gelegenen Kompressionsräume der Pumpe während des Pumpprozesses unsymmetrisch, kann durch einen axial unsymmetrischen Aufbau des Antriebs für eine angepasste Kraftkennlinie gesorgt werden.

Weitere Vorteile und Einzelheiten der Erfindung sollen an Hand von in den Figuren 1 bis 8 schematisch dargestellten Ausführungsbeispielen erläutert werden.

Es zeigen
- Figuren 1 und 2 Schnitte durch zwei Ausführungsformen eines Schwingkolbenantriebs nach der Erfindung,
- Figur 3 eine Schwingkolbenvakuumpumpe mit einem Antrieb nach der Erfindung,
- Figuren 4 und 5 Ausführungsbeispiele für Schwingkolbenvakuumpumpen mit jeweils zwei Kolben,
- Figuren 6 und 7 Schaltungsbeispiele und
- Figur 8 ein weiteres Ausführungsbeispiel für eine Schwingkolbenvakuumpumpe nach der Erfindung.

In den Figuren sind jeweils ein äußeres Gehäuse mit 2, der im Gehäuse 2 ausgebildete Zylinderraum mit 3, der im Zylinder 3 befindliche Kolben mit 4 und seine Laufbuchse mit 5 bezeichnet.

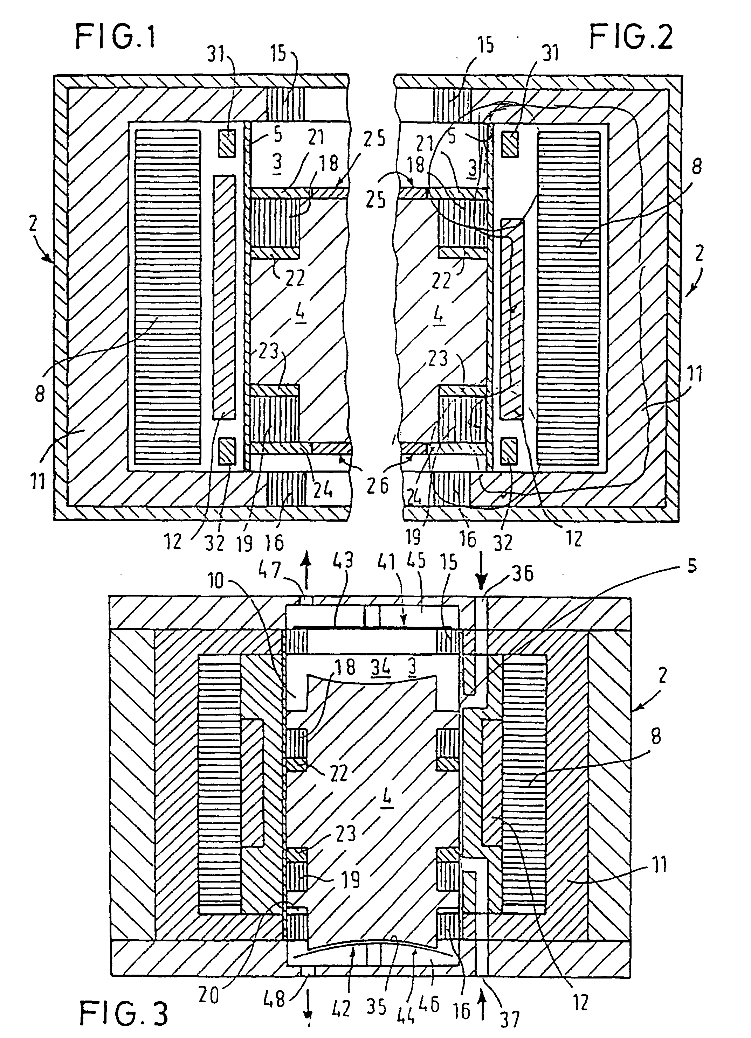

Im Gehäuse untergebrachte Statorbestandteile des elektromagnetischen Antriebs nach den Figuren 1 bis 5 sind mindestens eine Spule 8 sowie ein die Spule (n) 8 von drei Seiten umfassendes, im Querschnitt U-förmiges, nach innen offenes Polbauteil 11 (Joch). Weiterhin ist ein rohrabschnitt-förmiges Polbauteil 12 (Leitjoch) vorgesehen, das sich zwischen Spule 8 und Laufbuchse 5 befindet. Schließlich gehören zum Statorsystem zwei Permanentmagneten 15, 16, die sich in den Bereichen der Stirnseiten des Zylinders 3 befinden. Die U-Schenkel des Jochs 11 enden in Höhe dieser Permanentmagneten 15, 16.

Kolbenseitige Bestandteile des elektromagnetischen Antriebs sind zwei Permanentmagneten 18, 19, die sich in den Bereichen der Stirnseiten des Kolbens 4 befinden. In radialer Richtung sind den Permanentmagneten 18, 19 Polbauteile 21 bis 24 (Figuren 1, 2) zugeordnet. Zweckmäßig sind sie mit diesen Polbauteilen abgedeckt, wobei die stirnseitig befindlichen Abdeckungen 21, 24 Bestandteile von Kolbenabdeckscheiben 25, 26 sein können, die in ihren zentralen Bereichen aus nicht ferromagnetischem Werkstoff bestehen. Auch der Kolben 4 besteht im übrigen aus nicht ferromagnetischem Werkstoff.

Der Aufbau der in den Figuren 1 bis 5 dargestellten Antriebe ist zweckmäßig rotationssymmetrisch. Vorteilhaft ist dabei die Ausbildung ringförmiger Permanentmagneten, und zwar sowohl am Stator (15, 16) als auch am Kolben (18, 19). Nicht-rotationssymmetrische Lösungen wären aufwendiger in Bezug auf ihre Herstellung.

Bei allen in den Figuren 1 bis 5 dargestellten Ausführungsbeispielen sind jeweils zwei im wesentlichen stirnseitig angeordnete Permanentmagneten 18, 19 am Kolben vorgesehen. Diese könnten auch durch einen einstückigen Permanentmagneten ersetzt werden, der zum Beispiel in Form eines Rohres den Kolben 4 umgibt.

Zweckmäßig weisen die Schwingkolbenantriebe nach allen Figuren Sensorbauteile auf. Nur in den Figuren 1 und 2 sind solche Sensorbauteile 31, 32 dargestellt. Sie sind ebenfalls ringförmig ausgebildet. Jeweils einer ist im Bereich der beiden Stirnseiten des elektromagnetischen Antriebs angeordnet. Diese Sensoren 31, 32 dienen der Erkennung der Kolbenlage, hauptsächlich im Bereich seiner Totpunkte. Zweckmäßig sind die Sensoren 31, 32 als Ringspulen ausgeführt. Die in diesen Ringspulen induzierte Spannung ist von der Kolbenlage abhängig, so dass die erzeugten Signale zur Ansteuerung der Spule (n) 8 verwendet werden können. Statt der Ringspulen können auch Hall-Elemente, optische Sensoren oder Wirbelstromsensoren eingesetzt werden.

Die Schwingkolbenantriebe nach den Figuren 1 und 2 unterscheiden sich nur in Bezug auf die Ausbildung des Leitjochs 12. Beim Ausführungsbeispiel nach Figur 1 ist es in axialer Richtung symmetrisch ausgebildet. Die auf den Kolben 4 wirkenden Antriebskräfte sind deshalb ebenfalls symmetrisch. Beim Ausführungsbeispiel nach Figur 2 ist das Leitjoch 12 in axialer Richtung asymmetrisch ausgebildet. Sein Abstand zur Sensor-Spule 32 ist geringer als zur Sensorspule 31. Die im Bereich der Sensorspule 32 auf den Permanentmagneten 19 des Kolbens 4 ausgeübten Antriebskräfte sind deshalb größer als die entsprechenden Antriebskräfte im Bereich des Permanentmagneten 18. Diese Wirkung kann auch durch axial asymmetrische Gestaltung anderer Polbauteile, z.B. der Abdeckscheiben 21 bis 24, der Ausbildung der Schenkelenden des Jochs 11 oder dergleichen, erreicht werden. Im übrigen sind die Schwingkolbenantriebe nach den Figuren 1 und 2 sehr schematisch dargestellt. Mit dem Kolben 4 verbundene Antriebselemente wurden weggelassen.

Die Figur 3 zeigt eine Schwingkolbenvakuumpumpe mit einem Schwingkolbenantrieb nach'der Erfindung. Bei diesem Ausführungsbeispiel bilden der Zylinder 3, die Stirnseiten des Kolbens 4 und die Laufbuchse 5 Teilräume 34, 35, die die Funktion von Kompressionsräumen haben. Jede dieser Pumpstufen hat jeweils einen Einlass 36, 37, der seitlich in den Kompressionsraum 34 bzw. 35 mündet. Dadurch haben der Kolben und die Mündungen in an sich bekannter Weise die Funktion von Einlass-Steuerventilen.

Auslass-Ventile 41, 42 sind jeweils stirnseitig angeordnet. Zweckmäßig erstreckt sich die Auslassöffnung im wesentlichen über die gesamte Querschnittsfläche des Zylinders 3 (an sich bekannt aus der DE-A-196 34 517). Die Verschlusselemente sind als sich über den gesamten Querschnitt des Zylinders 3 erstreckende, flexible Teller 43, 44 ausgebildet, die zentral am Gehäuse 2 befestigt sind und peripher durch den erzeugten Druck oder durch die Stirnseiten des Kolbens betätigt werden. Beim Ausführungsbeispiel nach Figur 3 sind die Kolbenstirnseiten konkav gestaltet. Die Stirnseiten der Zylinderwand oder - wie in Figur 3 dargestellt - die äußeren Stirnflächen der statorseitigen Permanentmagneten 15, 16 bilden die Ventilsitze. Die aus den Ventilen 41, 42 austretenden Gase treten zunächst in Auslasskammern 45, 46 ein, an die sich die Auslässe 47, 48 anschließen.

Bei der Ausführung nach Figur 3 befinden sich die Stator-Permanentmagneten 15, 16 im Zylinder 3. Die Stirnseiten des Kolbens sind mit äußeren, der Größe dieser Magneten entsprechenden Aussparungen 10, 20 ausgerüstet. Diese Maßnahmen dienen der Vermeidung von Toträumen während des Betriebs der Pumpe.

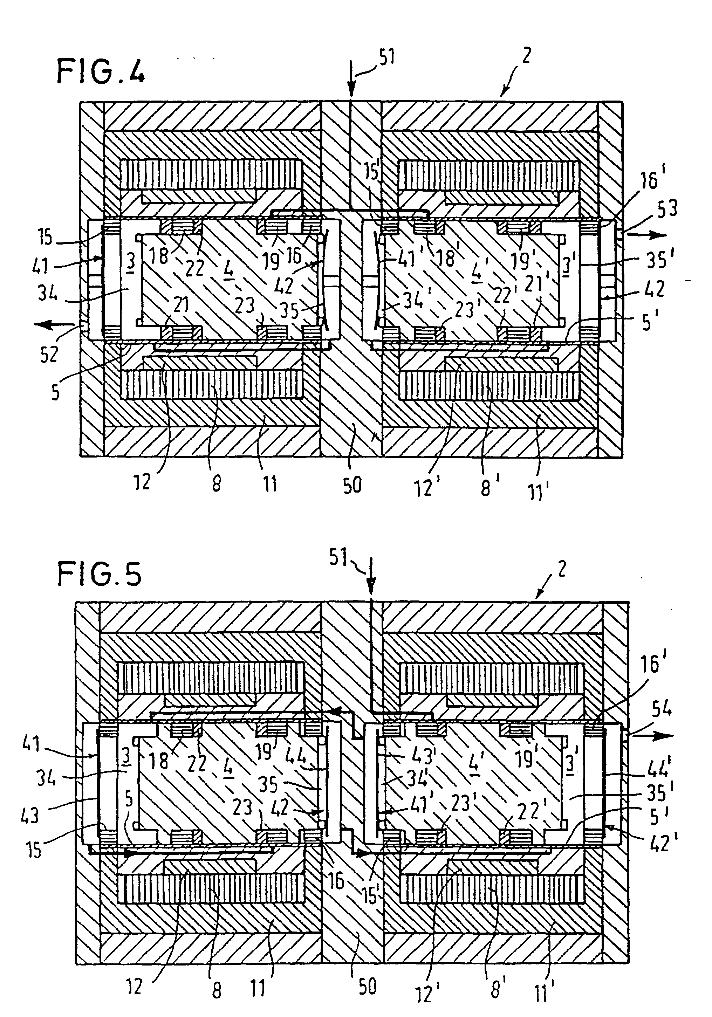

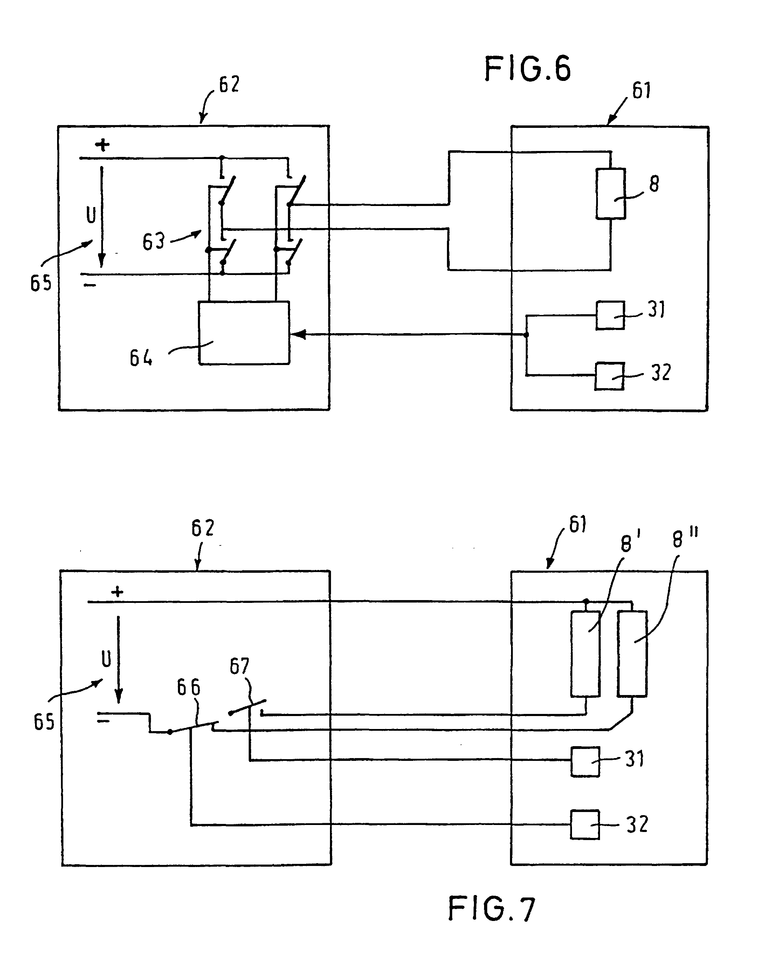

Die Figuren 4 und 5 zeigen Ausführungsbeispiele für Schwingkolbenpumpen, bei denen im Gehäuse 2 mit einer gemeinsamen mittleren Gehäusescheibe 50 jeweils zwei gleichartige Kolben 4, 4' untergebracht sind. Die Antriebe sind derart ausgebildet und gesteuert, dass die beiden Kolben 4, 4' gegensinnig schwingen. Infolge des dadurch bewirkten Massenausgleichs sind die Pumpen vibrationsfrei.

Beim Ausführungsbeispiel nach Figur 4 sind die beiden Pumpstufen der beiden Kolben 4 und 4' parallel geschaltet. Die jeweils schematisch durch Linien angedeuteten Gaswege lassen erkennen, dass das zu fördernde Gas vom Gaseinlass 51 den Kompressionskammern 35 und 34' zugeführt wird. Sie verlassen diese Kompressionskammern durch die Austrittsventile 42, 41'. Von dort aus werden sie jeweils den Kompressionskammern 34 bzw. 35' zugeführt. Die beiden Gasauslässe sind mit 52 und 53 bezeichnet.

Die dargestellten Auslassventile 41, 42 und 41', 42' sind ähnlich ausgebildet, wie beim Ausführungsbeispiel nach Figur 3. Unterschiedlich ist, dass die Stirnseiten der Kolben 4, 4' nicht konkav ausgebildet sondern mit Stößeln ausgerüstet sind, die die zugehörigen Ventilteller betätigen. Andere Ausführungen von Auslassventilen dieser Art sind aus der DE-A-196 34 517 bekannt.

Unterschiedlich gegenüber der Lösung nach Figur 3 ist weiterhin, dass beide Antriebe der Kolben 4 und 4' jeweils in axialer Richtung asymmetrisch ausgebildet sind. Die Jochbauteile 12, 12' sind zur jeweiligen Gasauslassseite (Auslässe 52, 53) hin verlängert. Die auslassseitigen Permanentmagneten 18 und 19' der Kolben 4 und 4' sind beidseitig mit Polbauteilen 21, 22 bzw. 21', 22' abgedeckt, während den inneren Permanentmagneten 19, 18' nur jeweils ein Polbauteil 23 bzw. 23' zugeordnet ist. Durch diese Maßnahmen sind die Kraftkennlinien der Antriebe der Tatsache angepasst, dass die äußeren Pumpstufen gegen Atmosphärendruck pumpen.

Beim Ausführungsbeispiel nach Figur 5 sind die vier Pumpstufen hintereinander geschaltet. Die vom Einlass 51 zum Auslass 54 geförderten Gase gelangen nacheinander durch die Kompressionsräume 34', 34, 35, 35'. Die Lösung nach Figur 5 weist die Besonderheit der magnetisch betätigten Schließbewegung der Ventile 41, 42, 41', 42' auf. Die tellerartigen Verschlusselemente bestehen zumindest zum Teil (z.B. Außenwand) aus ferromagnetischem Werkstoff, so dass die Statorpermanentmagneten 15, 16, 15', 16' eine anziehende Kraft ausüben. Die Öffnung der Teller erfolgt druckgesteuert oder kolbengesteuert (über die dargestellten Stößel), während die Schließbewegung von magnetischen Kräften bewirkt wird.

Die Figuren 6 und 7 zeigen Schaltungsbeispiele für mit Sensorbauteilen ausgerüstete Schwingkolbenantriebe. Die Bauteile des Antriebs sind jeweils im Block 61, die Bauteile der Elektronik im Block 62 untergebracht.

Figur 6 zeigt eine Lösung mit nur einer Spule 8, die in Abhängigkeit von den Signalen der Sensoren 31, 32 angesteuert wird. Der Ansteuerung dient eine vier Schalter umfassende Brückenschaltung 63, der zum einen die Speisespannung U und zum anderen die in einer Logik 64 verarbeiteten Signale der Sensoren 31, 32 zugeführt werden. Die vier leistungselektronischen Schalter werden über die Logik 64 so angesteuert, dass die beiden Anschlüsse der Spule 8 je nach gewünschter Stromrichtung in der Spule mit dem positiven oder negativen Pol der Gleichspannungsquelle 65 verbunden werden.

Bei der Anordnung nach Figur 7 befinden sich zwei gegensinnig gewickelte Spulen 8' und 8" im Spulenraum des Antriebs. Sie können nebeneinander oder konzentrisch zueinander angeordnet sein. In diesem Fall muss in beiden Spulen nur eine Stromflussrichtung möglich sein. Das eine Ende der Spulen wird daher fest mit dem positiven Pol der Gleichspannung U verbunden, während die anderen Enden der Spulen mittels zweier leistungselektronischer Schalter 66, 67 mit dem negativen Pol der Gleichspannung U abwechselnd verbunden werden. Die Ansteuerung der beiden Schalter erfolgt direkt über die Sensoren 31, 32 im oberen und unteren Totpunkt. Diese Anordnung minimiert den leistungselektronischen Aufwand. Sie bedeutet jedoch eine schlechtere Ausnutzung des Spulenraums.

Es besteht die Möglichkeit, auf Sensorbauteile im Antrieb zu verzichten. In diesem Fall kann die in die Spule(n) im Stator induzierte Spannung als Information zur Erkennung der Kolbenlage herangezogen und die Bestromung der Spule(n) von dieser Information abgeleitet werden.

Bezüglich der Steuerung der Spule(n) sind mehrere Varianten realisierbar. Bei der ersten wird eine Schwingfrequenz fest vorgegeben und der Strom in der/den Spule(n) so vorgegeben, dass diese Frequenz auch erreicht wird. Die Bewegungsumkehr erfolgt in der jeweiligen Endlage. Diese Vorgehensweise wird als Fremdsteuerung bezeichnet. Dieses Prinzip hat den Nachteil, dass es bei einer sehr großen Prozessbelastung zu einer Überlastung der Pumpe kommen kann.

Bei einem zweiten Steuergesetz wird das Prinzip der Selbststeuerung verwendet. In diesem Fall wird der maximale Strom in der/den Spule(n) vorgegeben und bei einer zu großen Belastung die Schwingfrequenz reduziert. Die Bewegungsumkehr erfolgt auch hier dann, wenn der Kolben in der jeweiligen Endlage angekommen ist.

Bei einem dritten Steuergesetz wird das zweite Steuergesetz insofern abgewandelt, als dass die Bewegungsumkehr bereits vor dem Erreichen der Endlage durchgeführt wird. Damit kann der Schwingkolbenmotor beim "Anpumpen" oder bei zu großer dauerhafter Last vor Überlastung geschützt werden. Zusätzlich kann das System für kleinere Kräfte ausgelegt und damit kostengünstiger realisiert werden. Dies gilt auch für das zweite Steuergesetz.

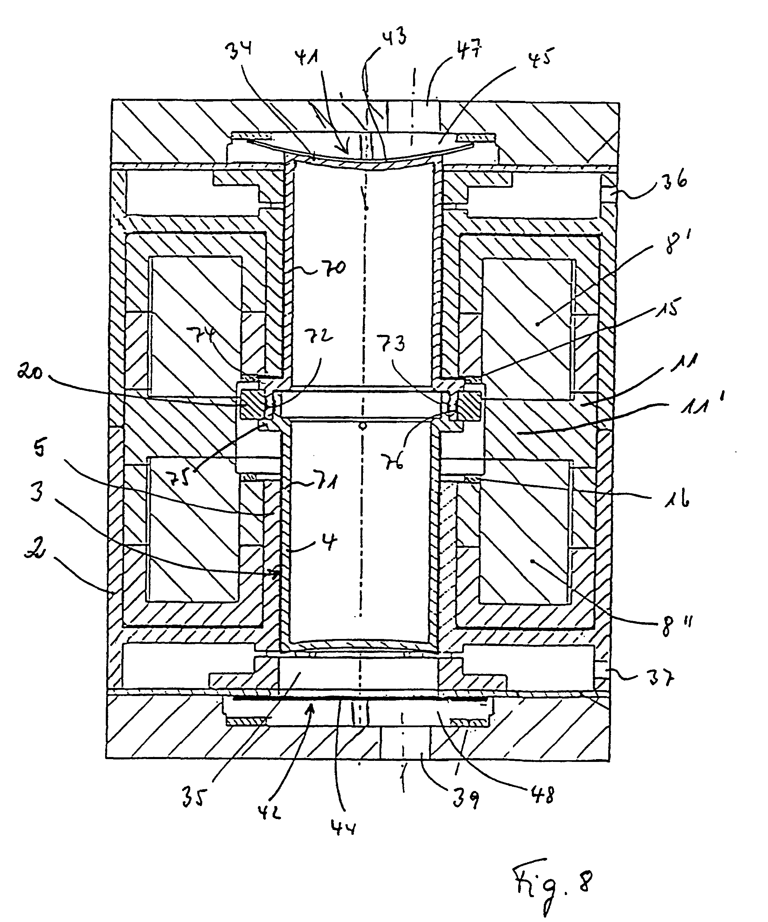

Das in der Figur 8 dargestellte Ausführungsbeispiel einer Schwingkolbenvakuumpumpe nach der Erfindung unterscheidet sich von der Ausführung nach Figur 3 dadurch, dass der Kolben 4 mit nur einem Permanentmagnetring 20 ausgerüstet ist, der in axialer Richtung zentral angeordnet ist. Er umgibt den Mantel des Kolbens 4, so dass die beiden statorseitigen Permanentmagneten 15, 16 in einem Abstand, der der Amplitude der Kolbenbewegung entspricht, seitlich daneben angeordnet werden können. Der statorseitige Teil des Linearantriebs ist dieser Anordnung der Permanentmagneten 15, 16, 20 angepaßt. Es sind zwei Spulen 8', 8" vorgesehen, die von einem Joch 11 mit einem zentralen Jochbauteil 11' umfaßt werden. Die Stirnseite des radial nach innen gerichteten zentralen Jochbauteiles 11' umgibt den Permanentmagnetring 20. Die Stirnseiten der inneren, sich axial erstreckenden Jochbauteile liegen den statorseitigen Permanentmagneten 15, 16 von außen an.

Figur 8 läßt weiterhin einen zweckmäßigen Aufbau des Kolbens 4 erkennen. Er besteht beispielhaft aus zwei Topfbauteilen 70, 71, die im Bereich ihre offenen Seiten z.B. durch Kleben miteinander verbunden sind. Dazu können je ein axial gerichteter Vorsprung 72 bzw. 73 dienen, die im zusammengefügten Zustand konzentrisch einander anliegen. Weiterhin sind die Topfbauteile 70, 71 im Bereich ihrer offenen Seiten jeweils mit einem sich radial erstreckenden Rand 74 bzw. 75 ausgerüstet. Der Abstand dieser Ränder 74, 75 von der jeweiligen offenen Stirnseite der Topfbauteile 70, 71 ist so gewählt, dass sie im zusammengefügten Zustand eine umlaufende Nut 76 bilden, deren Breite der Breite des Permanentmagnetringes 20 entspricht. Mit dieser Lösung können eine sichere Befestigung des Ringes 20 auf dem Kolben 4 sowie eine möglichst geringe Kolbenmasse erreicht werden.

## Patentansprüche

1. Schwingkolbenantrieb, insbesondere für eine Schwingkolbenvakuumpumpe, mit einem Gehäuse (2), mit einem im Gehäuse ausgebildeten Zylinder (3), mit einem im Zylinder hin und her bewegbaren Kolben (4), mit einem elektromagnetischen Antrieb für den Kolben (4), welcher statorseitig einen Elektromagneten (11), bestehend aus einer Spule (8) und Polbauteilen (11) sowie zwei Permanentmagneten (15, 16) und kolbenseitig einen Permanentmagneten (18, 19, 20) umfasst, wobei der Permanentmagnet (18, 19, 20) des Kolbens (4) und die Permanentmagneten (15, 16) des Stators so ausgebildet und angeordnet sind, dass der Kolben (4) im Ruhezustand eine in axialer Richtung definierte, z. B. mittlere Lage einnimmt, **dadurch gekennzeichnet, dass** das statorseitige Polbauteil (11) im Querschnitt U-förmig ausgebildet ist und dass seine U-Schenkel in Höhe der statorseitigen Permanentmagneten (15, 16) enden.

2. Antrieb nach Anspruch 1, **dadurch gekennzeichnet, dass** der Kolben (4) jeweils stirnseitig mit einem Permanentmagneten (18, 19) ausgerüstet ist und dass sich jeweils ein statorseitiger Permanentmagnet (15, 16) im Bereich der Stirnseiten des Zylinders (3) befindet.

3. Antrieb nach Anspruch 2, **dadurch gekennzeichnet, dass** sich die statorseitigen Permanentmagneten (15, 16) im Zylinder (3) befinden und dass die Stirnseiten des Kolbens (4) jeweils mit Aussparungen ausgerüstet sind, die den Abmessungen der statorseitigen Permanentmagneten (15, 16) entsprechen.

4. Antrieb nach Anspruch 3, **dadurch gekennzeichnet, dass** den Permanentmagneten (18, 19) am Kolben (4) axial angeordnete Polbauteile (21 bis 24) zugeordnet sind.

5. Antrieb nach Anspruch 1, **dadurch gekennzeichnet, dass** der Kolben mit nur einem, in axialer Richtung etwa zentral angeordneten Permanentmagneten (20) ausgerüstet ist.

6. Antrieb nach Anspruch 5, **dadurch gekennzeichnet, dass** der Permanentmagnet (20) dem Mantel des Kolbens (4) umgibt, dass je ein statorseitig angeordneter Permanentmagnet (15, 16) seitlich neben dem kolbenseitig angeordneten Permanentmagneten (20) vorgesehen ist und dass der Abstand der statorseitigen Permanentmagneten- (15, 16) der Amplitude der Kolbenbewegung entspricht.

7. Antrieb nach Anspruch 6, **dadurch gekennzeichnet, dass** zwei in axialer Richtung nebeneinanderliegende Spulen , ( 8', 8") . vorgesehen sind, dass ein Joch (11) diese Spulen umfaßt, daß die Stirnseite eines zentralen Jochbauteiles (11') den kolbenseitigen Permanentmagneten (20) umgibt und daß die Stirnseiten der inneren, sich axial erstreckenden Jochbauteile den statorseitigen Permanentmagneten (15, 16) von außen anliegen.

8. Antrieb nach einem der Ansprüche 1 bis 7, **dadurch gekennzeichnet, dass** er rotationssymmetrisch aufgebaut ist und dass die Permanentmagneten (15, 16, 18, 19, 20), jeweils ringförmig ausgebildet sind.

9. Antrieb nach Anspruch 8, **dadurch gekennzeichnet, dass** das U-förmig ausgebildete Polbauteil (11) eine oder mehrere Spulen (8, 8', 8") von drei Seiten umfasst.

10. Antrieb nach Anspruch 9, **dadurch gekennzeichnet, dass** sich zwischen der Spule oder den Spulen und dem Zylinder (3) ein weiteres, etwa rohrabschnittförmiges Polbauteil (12) befindet.

11. Antrieb nach einem der Ansprüche 1 bis 10 **dadurch gekennzeichnet, dass** die Polbauteile und/oder die Magnetkräfte axial symmetrisch aufgebaut bzw. gewählt sind.

12. Antrieb nach einem der vorhergehenden Ansprüche, **dadurch gekennzeichnet, dass** er mit Sensoren (31, 32) zur Erkennung der Kolbenlage ausgerüstet ist.

13. Schwingkolbenvakuumpumpe mit einem Antrieb nach einem der Ansprüche 1 bis 12, **dadurch gekennzeichnet, dass** mindestens eine der beiden vom Kolben (4) und vom Zylinder (3) gebildeten Kammern (34, 35) mit einem Eintrittsventil und mit einem Austrittsventil ausgerüstet ist.

14. Pumpe nach Anspruch 13, **dadurch gekennzeichnet, dass** eine seitlich in die Kammer , mündende Einlassleitung (36) vorgesehen ist, deren Mündung zusammen mit dem Kolben (4) ein Eintrittsventil bildet.

15. Pumpe nach Anspruch 13 oder 14, **dadurch gekennzeichnet, dass** druck-oder kolbengesteuerte Austrittsventile (41, 42) vorgesehen sind.

16. Pumpe nach Anspruch 15, **dadurch gekennzeichnet, dass** die Verschlussstücke (43, 44) der Austrittsventile (41, 42) als Teller ausgebildet sind und sich im wesentlichen über den gesamten Querschnitt des Zylinders-(3) erstrecken.

17. Pumpe nach Anspruch 16, **dadurch gekennzeichnet, dass** die Schließbewegung der Teller (43, 44) durch Federkräfte erfolgt.

18. Pumpe nach Anspruch 16, **dadurch gekennzeichnet, dass** die Schließbewegung der Teller (43, 44) durch magnetische Kräfte erfolgt.

19. Pumpe nach Anspruch 18, **dadurch gekennzeichnet; dass** die Teller (43, 44) zumindest teilweise aus ferromagnetischem Werkstoff bestehen und dass die äußere Stirnseite der Statorpermanentmagneten (15, 16, 15', 16') den Ventilsitz bilden.

20. Pumpe nach einem der Ansprüche 13 bis 19, **dadurch gekennzeichnet, dass** ein oder mehrere Zylinder-/Kolbenpaare (3, 4, 3', 4') im Gehäuse (2) untergebracht sind.

21. Antrieb oder Pumpe nach einem der vorhergehenden Ansprüche, **dadurch gekennzeichnet, dass** von Sensoren (31, 32) oder von anderen kolbenlagerabhängigen Signalen gesteuerte Schaltmittel (63, 66, 67) zur Ansteuerung der Spule oder Spulen (8 ,8', 8") vorgesehen sind.

22. Antrieb oder Pumpe nach einem der vorhergehenden Ansprüche, **dadurch gekennzeichnet, dass** ihr Kolben (4) aus zwei Topfbauteilen (70, 71) besteht, die im Bereich ihrer offenen Stirnseiten mit Verbindungsmitteln (72, 73) ausgerüstet sind.

23. Antrieb oder Pumpe nach Anspruch 22 und einem der Ansprüche 5 bis 7, **dadurch gekennzeichnet, dass** die Topfbauteile (70, 71) im Bereich ihrer offenen Stirnseiten mit Rändern (74, 75) ausgerüstet sind, die im zusammengebauten Zustand eine Ringnut (76) zur Aufnahme des Magnetringes (20) bilden.

24. Verfahren zum Betrieb einer Pumpe oder eines Antriebs nach Anspruch 21, **dadurch gekennzeichnet, dass** die Frequenz der Kolbenbewegung und/oder der maximale Strom in der Spule oder in den Spulen vorgegeben wird.

25. Verfahren nach Anspruch 24, **dadurch gekennzeichnet, dass** die Bewegungsumkehr bereits vor dem Erreichen der Endlage durchgeführt wird.

26. Verfahren nach Anspruch 24 oder 25 zum Betrieb einer Pumpe nach Anspruch 22, **dadurch gekennzeichnet, dass** die zugehörigen Antriebe so gesteuert werden, dass die Kolben(4, 4') paarweise gegensinnig schwingen.

## Claims

1. Reciprocating piston drive, in particular for a reciprocating piston vacuum pump, with a housing (2), with a cylinder (3) formed in the housing, with a piston (4) which can reciprocate in the cylinder, and with an electromagnetic drive for the piston (4), which drive comprises on the stator side an electromagnet (11) consisting of a coil (8) and pole components (11) as well as two permanent magnets (15, 16) and on the piston side one permanent magnet (18, 19, 20), wherein the permanent magnet (18, 19, 20) of the piston (4) and the permanent magnets (15, 16) of the stator are formed and disposed such that the piston (4) adopts a position which is defined in the axial direction, e.g. a central position, in the idle state, **characterised in that** the pole component (11) on the stator side is U-shaped in cross section, and that its U-limbs end at the level of the permanent magnets (15, 16) on the stator side.

2. Drive according to Claim 1, **characterised in that** the piston (4) is provided at each front side with a permanent magnet (18, 19), and that a permanent magnet (15, 16) on the stator side is in each case located in the area of the front sides of the cylinder (3).

3. Drive according to Claim 2, **characterised in that** the permanent magnets (15, 16) on the stator side are located in the cylinder (3), and that the front sides of the piston (4) are in each case provided with recesses which correspond to the dimensions of the permanent magnets (15, 16) on the stator side.

4. Drive according to Claim 3, **characterised in that** axially disposed pole components (21 to 24) are associated with the permanent magnets (18, 19) at the piston (4).

5. Drive according to Claim 1, **characterised in that** the piston is provided with just one permanent magnet (20) disposed approximately centrally in the axial direction.

6. Drive according to Claim 5, **characterised in that** the permanent magnet (20) encompasses the skirt of the piston (4), that each permanent magnet (15, 16) disposed on the stator side is provided at the side of the permanent magnet (20) disposed on the piston side, and that the spacing of the permanent magnets (15, 16) on the stator side corresponds to the amplitude of the piston motion.

7. Drive according to Claim 6, **characterised in that** two coils (8', 8") lying side-by-side in the axial direction are provided, that a yoke (11) embraces these coils, that the front side of a central yoke component (11') encompasses the permanent magnet (20) on the piston side, and that the front sides of the inner, axially extending yoke components rest from the outside against the permanent magnets (15, 16) on the stator side.

8. Drive according to any one of Claims 1 to 7, **characterised in that** it is of rotationally symmetrical structure, and that the permanent magnets (15, 16, 18, 19, 20) are in each case ring-shaped.

9. Drive according to Claim 8, **characterised in that** the U-shaped pole component (11) embraces one or more coils (8, 8', 8") from three sides.

10. Drive according to Claim 9, **characterised in that** a further pole component (12) shaped approximately like a tube section is located between the coil or the coils and the cylinder (3).

11. Drive according to any one of Claims 1 to 10, **characterised in that** the pole components and/or the magnetic forces are set up or selected so as to be axially symmetrical.

12. Drive according to any one of the preceding Claims, **characterised in that** it is provided with sensors (31, 32) for detecting the piston position.

13. Reciprocating piston vacuum pump with a drive according to any one of Claims 1 to 12, **characterised in that** at least one of the two chambers (34, 35) formed by the piston (4) and by the cylinder (3) is provided with an inlet valve and with an outlet valve.

14. Pump according to Claim 13, **characterised in that** an inlet line (36) is provided which opens into the chamber at the side and the opening of which, together with the piston (4), forms an inlet valve.

15. Pump according to Claim 13 or 14, **characterised in that** pressure- or piston-controlled outlet valves (41, 42) are provided.

16. Pump according to Claim 15, **characterised in that** the closure pieces (43, 44) of the outlet valves (41, 42) are formed as discs and extend substantially over the entire cross section of the cylinder (3).

17. Pump according to Claim 16, **characterised in that** the closing motion of the discs (43, 44) is effected by spring forces.

18. Pump according to Claim 16, **characterised in that** the closing motion of the discs (43, 44) is effected by magnetic forces.

19. Pump according to Claim 18, **characterised in that** the discs (43, 44) consist at least partly of ferromagnetic material, and that the outer front side of the stator permanent magnets (15, 16, 15', 16') form the valve seat.

20. Pump according to any one of Claims 13 to 19, **characterised in that** one or more cylinder/piston pair(s) (3, 4, 3', 4' is/are accommodated in the housing (2).

21. Drive or pump according to any one of the preceding Claims, **characterised in that** switching means (63, 66, 67), which are controlled by sensors (31, 32) or by other signals dependent on the piston position, are provided to activate the coil or coils (8, 8', 8").

22. Drive or pump according to any one of the preceding Claims, **characterised in that** their piston (4) consists of two pot components (70, 71) which are provided with joining means (72, 73) in the area of their open front sides.

23. Drive or pump according to Claim 22 and any one of Claims 5 to 7, **characterised in that** the pot components (70, 71) are provided with rims (74, 75) in the area of their open front sides, which rims, in the assembled state, form a ring groove (76) for holding the magnet ring (20).

24. Method for operating a pump or a drive according to Claim 21, **characterised in that** the frequency of the piston motion and/or the maximum current in the coil or in the coils are/is predetermined.

25. Method according to Claim 24, **characterised in that** the reversal of motion is effected even before the end position is reached.

26. Method according to Claim 24 or 25 for operating a pump according to Claim 22, **characterised in that** the related drives are controlled such that the pistons (4, 4') reciprocate in pairs in opposite directions.

## Revendications

1. Entraînement à piston oscillant, destiné notamment à une pompe à vide à piston oscillant, comportant un corps (2), un cylindre (3) conformé dans ledit corps, un piston (4) animé d'un mouvement de va-et-vient dans ledit cylindre, un entraînement électromagnétique du piston (4) comprenant, du côté du stator, un électroaimant (11) composé d'une bobine (8) et d'éléments polaires (11), ainsi que deux aimants permanents (15, 16) et, du côté du piston, un aimant permanent (18, 19, 20), l'aimant permanent (18, 19, 20) du piston (4) et les aimants permanents (15, 16) du stator étant configurés et disposés de telle manière que le piston (4) se trouve, à l'état de repos, dans une position définie dans la direction axiale, par exemple dans une position médiane, **caractérisé en ce que** l'élément polaire (11) du côté du stator a une section transversale conformée en U et **en ce que** ses branches de U se terminent à la hauteur des aimants permanents (15, 16) du stator.

2. Entraînement selon la revendication 1, **caractérisé en ce que** le piston (4) est à chaque fois pourvu frontalement d'un aimant permanent (18, 19) et **en ce qu'**il se trouve à chaque fois un aimant permanent (15, 16) du stator dans la région frontale du cylindre (3).

3. Entraînement selon la revendication 2, **caractérisé en ce que** les aimants permanents (15, 16) du stator se situent dans le cylindre (3) et **en ce que** les faces frontales du piston (4) sont chacune pourvues d'évidements correspondant aux dimensions des aimants permanents (15, 16) du stator.

4. Entraînement selon la revendication 3, **caractérisé en ce que** des éléments polaires (21 à 24) disposés axialement sont attribués aux aimants permanents (18, 19) du piston (4).

5. Entraînement selon la revendication 1, **caractérisé en ce que** le piston est pourvu d'un seul aimant permanent (20) disposé en direction axiale de manière approximativement centrée.

6. Entraînement selon la revendication 5, **caractérisé en ce que** l'aimant permanent (20) entoure l'enveloppe du piston (4), **en ce qu'**un aimant permanent (15, 16) disposé du côté du stator est respectivement prévu latéralement de chaque côté de l'aimant permanent (20) disposé du côté du piston et **en ce que** l'entrefer des aimants permanents (15, 16) du côté du stator correspond à l'amplitude du déplacement du piston.

7. Entraînement selon la revendication 6, **caractérisé en ce que** sont prévues deux bobines (8', 8" ) adjacentes dans la direction axiale, lesquelles bobines sont comprises dans une culasse (11), **en ce que** les faces frontales d'un élément central de culasse (11') entourent l'aimant permanent (20) du piston et **en ce que** les faces frontales des éléments internes de culasse s'étendant axialement bordent l'extérieur des aimants permanents (15, 16) côté stator.

8. Entraînement selon l'une des revendications 1 à 7, **caractérisé en ce qu'**il est conçu avec un axe de symétrie de révolution et **en ce que** chacun des aimants permanents (15, 16, 18, 19, 20) est de configuration annulaire.

9. Entraînement selon la revendication 8, **caractérisé en ce que** l'élément polaire (11) conformé en U regroupe une ou plusieurs bobines (8, 8', 8'') sur trois côtés.

10. Entraînement selon la revendication 9, **caractérisé en ce qu'**un autre élément polaire (12) approximativement en forme de section tubulaire se trouve entre la bobine ou les bobines et le cylindre (3).

11. Entraînement selon l'une des revendications 1 à 10, **caractérisé en ce que** les éléments polaires et/ou les forces magnétiques sont choisis ou conçus de manière à être axialement symétrique.

12. Entraînement selon l'une des revendications précédentes, **caractérisé en ce qu'**il est pourvu de capteurs (31, 32) permettant d'identifier la position du piston.

13. Pompe à vide à piston oscillant comportant un entraînement selon l'une des revendications 1 à 12, **caractérisée en ce qu'**au moins une des deux chambres (34, 35) formées par le piston (4) et par le cylindre (3) est pourvue d'une soupape d'entrée et d'une soupape de sortie.

14. Pompe selon la revendication 13, **caractérisée en ce qu'**il est prévu une conduite d'admission (36) débouchant latéralement dans la chambre, l'embouchure de cette conduite formant, conjointement avec le piston (4), une soupape d'entrée.

15. Pompe selon la revendication 13 ou 14, **caractérisée en ce que** sont prévus des soupapes de sortie (41, 42) commandés par pression ou par piston.

16. Pompe selon la revendication 15, **caractérisée en ce que** les pièces d'obturation (43, 44) des soupapes de sortie (41, 42) sont configurées en soucoupes et s'étendent essentiellement sur toute la section transversale du cylindre (3).

17. Pompe selon la revendication 16, **caractérisée en ce que** le mouvement de fermeture des soucoupes (43, 44) s'effectue sous l'action de forces élastiques.

18. Pompe selon la revendication 16, **caractérisée en ce que** le mouvement de fermeture des soucoupes (43, 44) s'effectue sous l'action de forces magnétiques.

19. Pompe selon la revendication 18, **caractérisée en ce que** les soucoupes (43, 44) sont composées, au moins partiellement, d'un matériau ferromagnétique et **en ce que** les faces frontales extérieures des aimants permanents de stator (15, 16, 15', 16') forment le siège de la soupape.

20. Pompe selon l'une des revendications 13 à 19, **caractérisée en ce qu'**un ou plusieurs couples cylindre/piston (3, 4, 3', 4') sont logées dans le corps (2).

21. Entraînement ou pompe selon l'une des revendications précédentes, **caractérisés en ce que** des moyens de commutation (63, 66, 67) commandés par des capteurs (31, 32) ou par d'autres signaux qui dépendent de la position du piston sont prévus pour la commande de la bobine ou des bobines (8, 8', 8" ) .

22. Entraînement ou pompe selon l'une des revendications précédentes, **caractérisés en ce que** leur piston (4) consiste en deux éléments en godet (70, 71) pourvus de moyens de raccordement (72, 73) dans la région de leurs faces frontales ouvertes.

23. Entraînement ou pompe selon la revendication 22 et l'une des revendications 5 à 7, **caractérisés en ce que** les éléments en godet (70, 71) sont pourvus de bords (74, 75) dans la région de leurs faces frontales ouvertes, lesquels forment, une fois l'assemblage réalisé, une rainure annulaire (76) pour loger l'aimant annulaire (20).

24. Procédé de fonctionnement d'une pompe ou d'un entraînement selon la revendication 21, **caractérisé en ce que** la fréquence du déplacement du piston et/ou le courant maximal traversant la bobine ou les bobines est prédéterminée.

25. Procédé selon la revendication 24, **caractérisé en ce que** le renversement de mouvement se produit avant même que la position de fin de course ne soit atteinte.

26. Procédé selon la revendication 24 ou 25 pour le fonctionnement d'une pompe selon la revendication 22, **caractérisé en ce que** les entraînements adéquats sont commandés de telle manière que les pistons (4, 4') oscillent par paire en sens opposés.
